# EUROPÄISCHE PATENTANMELDUNG

(11) **EP 2 093 664 A1**
(43) Veröffentlichungstag der Anmeldung: **26.08.2009**
(21) Anmeldenummer: 08003376.4
(22) Anmeldetag: 25.02.2008
(51) Int. Cl.: G06F 9/44

(54) **Verfahren zur Bearbeitung einer Anzeige von Objekten**

(71) Anmelder: SIEMENS AKTIENGESELLSCHAFT, 80333 München (DE)
(72) Erfinder: Dolnik, Alexander, 76189 Karlsruhe (DE); Moser, Josef, 76694 Forst (DE); Engel, Gernot, 91058 Erlangen (DE); Rohr, Anette, 76135 Karlsruhe (DE); Wiedenberg, Peter, 90537 Feucht (DE)

(57) **Zusammenfassung**

Ein Verfahren zum Bearbeiten einer Anzeige von Objekten durch Einfügen, Verändern oder Entfernen von Objekten oder Objektparametern, bei dem zu bearbeitende Objekte bzw. Objektparameter in einem separaten Vorschaufenster dargestellt werden, ist **dadurch gekennzeichnet, dass** die Bearbeitung der Objekte unmittelbar in dem Vorschaufenster erfolgt.

## Beschreibung

Die Erfindung betrifft ein Verfahren nach dem Oberbegriff des Anspruchs 1, zum Bearbeiten einer Anzeige von Objekten durch Einfügen, Verändern oder Entfernen von Objekten oder Objektparametern, bei dem zu bearbeitende Objekte bzw. Objektparameter in einem separaten Vorschaufenster dargestellt werden.

Ein derartiges Verfahren ist im Stand der Technik hinreichend bekannt und wird beispielsweise bei bekannten Textverarbeitungssystemen verwendet. So ist beispielsweise bekannt, dass bei einem Textverarbeitungssystem in einem Printdialog auf der linken Seite einer Anzeige so genannte Radiobuttons mit der Beschriftung "Hochformat" und "Querformat" angezeigt werden. Auf der rechten Seite der Anzeige ist ein Vorschaufenster zu sehen, in welchem eine Textseite angezeigt wird. Mittels der Radiobuttons lässt sich die Textseite dahin gehend bearbeiten, dass bestimmt werden kann, ob sie im Hochformat oder Querformat angezeigt werden soll. Das Vorschaufenster dient nur zur Anzeige und kann nicht in den Prozess der Parametrierung einbezogen werden.

Durch die Bearbeitung des im Vorschaufenster angezeigten Objektes, wie im vorliegenden Fall die Textseite, mittels Anklicken der auf der linken Seite der Anzeige dargestellten Radiobuttons entsteht ein Bruch zwischen der Einstellung auf der einen Seite und der Vorschau auf der anderen Seite. Dies wird von Anwendern des betreffenden Programms als nicht angenehm empfunden.

Des Weiteren ist es bekannt, Objekte in ein auf der rechten Seite einer Anzeige dargestelltes Vorschaufenster dadurch einzufügen, dass das betreffende Objekt bzw. die betreffenden Objekte in einer auf der linken Seite der Anzeige dargestellten Tabelle markiert werden und die Übertragung mittels eines in der Mitte der Anzeige dargestellten Buttons vorgenommen wird. Nachteilig bei diesem Verfahren ist, dass große Datenmengen vom Anwender nicht einfach erfasst werden können. Ab etwa sieben Objekten benötigt der Mensch eine Clusterung, um die Objekte mühelos erfassen zu können.

Des Weiteren ist nachteilig, dass die Reihenfolge der Objekte nicht festgelegt werden kann. Ebenso können erweiterte Einstellungen, wie beispielsweise eine Vater-Kind-Beziehung, welche zwischen einem Schaltflächenbereich und Schaltflächen bestehen können, nicht auf einfache Weise realisiert werden.

Es ist Aufgabe der Erfindung, ein eingangs genanntes Verfahren zur Verfügung zu stellen, bei dem im Wesentlichen kein Bruch zwischen der Auswahl von Objekten oder Objektparametern und der betreffenden Vorschau vorhanden ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Verfahren zum Bearbeiten einer Anzeige von Objekten durch Einfügen, Verändern oder Entfernen von Objekten oder Objektparametern, bei dem zu bearbeitende Objekte bzw. Objektparameter in einem separaten Vorschaufenster dargestellt werden, dadurch gekennzeichnet, dass die Bearbeitung der Objekte unmittelbar in dem Vorschaufenster erfolgt.

Dadurch, dass die Bearbeitung der Objekte unmittelbar in dem Vorschaufenster erfolgt, ist es nicht mehr erforderlich, zwischen einem Bereich der Anzeige, in dem eine Auswahl erfolgt, und dem Vorschaufenster zu wechseln. Der Anwender kann sich vollständig auf das Vorschaufenster konzentrieren. Ein Bruch zwischen der Einstellung auf der einen Seite der Anzeige und der Vorschau auf der anderen Seite der Anzeige entsteht somit nicht mehr.

In vorteilhafter Weise kann insbesondere die Hinzufügung bzw. Entfernung von Objekten in das Vorschaufenster bzw. aus dem Vorschaufenster mittels einer Drag-and-Drop-Operation, die an sich bekannt ist, erfolgen, wie dies bei einer besonderen Ausführungsform der Erfindung vorgesehen ist. Hierdurch lässt sich die Anzeige von Objekten auf einfache Weise dadurch bearbeiten, dass ein entsprechendes Objekt auf bekannte Weise angeklickt und in das oder aus dem Vorschaufenster gezogen wird. Die Vorschau wird somit unmittelbar in den Prozess der Parametrierung einbezogen. Hierdurch erhält der Anwender ein direktes visuelles Feedback und kann auch mehrstufige und komplexe Einstellungen auf einfache Weise vornehmen.

Die Bearbeitung der Objekte bzw. Objektparameter kann auch durch eine Auswahl aus vorgegebenen Objekten in einem Pop-Up-Menü erfolgen. Da diese Vorgehensweise ebenfalls an sich bekannt ist, kann der Anwender die Vorschau auch hierdurch in einer ihm vertrauten Weise bearbeiten.

In ähnlicher Weise, wie die Bearbeitung der Objekte bzw. Objektparameter durch Auswahl einer Vorgabe in einem Pop-Up-Menü erfolgen kann, können Objekte bzw. Objektparameter mittels eines Datei-Browse-Dialogs aus externen Dateien in das Vorschaufenster geladen werden, wie dies bei einer weiteren besonderen Ausführungsform der Fall ist. Hierdurch lässt sich eine nahezu unbegrenzte Zahl von Objekten bzw. Objektparametern in das Vorschaufenster übernehmen.

Objekte können beispielsweise Schaltflächen oder Bereiche sein, in welchen beispielsweise die Uhrzeit angezeigt wird. Die Objekte können aber auch als Bereiche ausgebildet sein, welche als Platzhalter dienen, wie dies bei einer weiteren besonderen Ausführungsform der Erfindung vorgesehen ist. Solche Bereiche können beispielsweise für eine später definierte Navigation dienen oder auch einen freien Bereich festlegen, welcher nicht mit globalen Elementen belegt werden darf. Beispielsweise kann ein Bereich für Navigationsbuttons (Child Button Area) definiert werden, in den Schaltflächen für alle untergeordneten Screens eingefügt werden, sobald diese erzeugt werden. Der Anwender kann festlegen, wie breit dieser Bereich sein soll, und ihn dann in dem Vorschaufenster positionieren.

Mittels des erfindungsgemäßen Verfahrens lassen sich insbesondere auf einfache Weise Seiten oder deren Vorlagen, wie beispielsweise Bilder und Vorlagen in WinCC flex, konfigurieren. Hierbei sind komplexe Einstellungen wie beispielsweise Vater-Kind-Beziehungen, eine Auswahl aus vielen Objekten und freies Positionieren von Objekten möglich. Des Weiteren können globale Elemente in der Titelleiste und Schaltflächen parametrisiert werden. Hierzu können Bereiche definiert werden, welche die Schaltflächen beinhalten. Die Elemente können mittels Drag-and-Drop ausgewählt und positioniert werden.

Insbesondere ist es möglich, erweiterte komplexe Einstellungsmöglichkeiten intuitiv konfigurierbar zu machen. Die Auswahl der Schaltflächenbereiche, die Schaltflächen selbst und deren Position lassen sich einfach konfigurieren. Das Hinzufügen und Positionieren von verschiedenen Elementen wird durch leicht verständliches visuelles Feedback vereinfacht.

Des Weiteren können Werkzeuge, die zur Bearbeitung in Grafikprogrammen genutzt werden, je nach Anwendungsfall auch in dem Vorschaufenster verwendet werden. Denkbar sind beispielsweise Funktionen zum Vergrößern oder Verkleinern der Ansicht, Ausrichten der Objekte oder die Einstellung von Farben und Größen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigen:
- Figur 1 bis 3: drei Stufen der Einfügung einer Schaltfläche in ein Vorschaufenster mittels Drag-and-Drop,
- Figur 4: die Festlegung der Breite eines Bereichs für Vater-Sohn-Navigationsschaltflächen und
- Figur 5: den in das Vorschaufenster eingefügten Bereich der Navigationsschaltflächen.

Wie den Figuren entnommen werden kann, ist auf der rechten Seite einer Anzeige 1 ein Vorschaufenster 2 angeordnet. Auf der linken Seite der Anzeige 1 sind in einem ersten Feld 3 Systemschaltflächen 3a bis 3d, in einem zweiten Feld 4 Navigationsschaltflächen 4a bis 4e und in einem dritten Feld 5 Platzhalter 5a für Navigationsschaltflächen für eine Vater-Kind-Beziehung angeordnet. In einem vierten Feld 6 kann durch Anklicken vorgegebener Positionen 6a bis 6c angegeben werden, an welchen Seiten des Vorschaufensters 2 Schaltflächen anordenbar sein sollen.

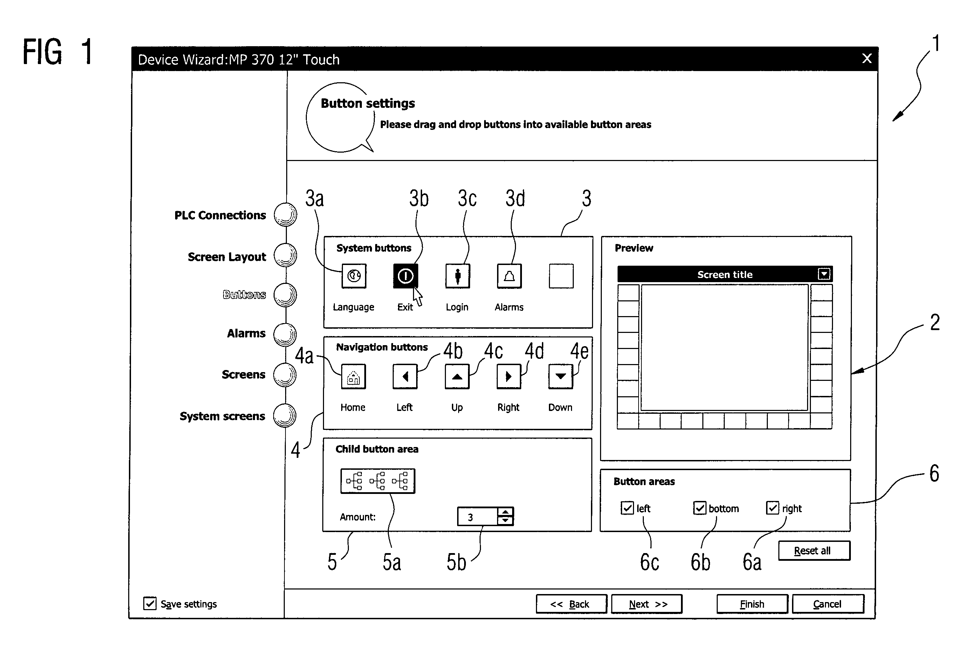

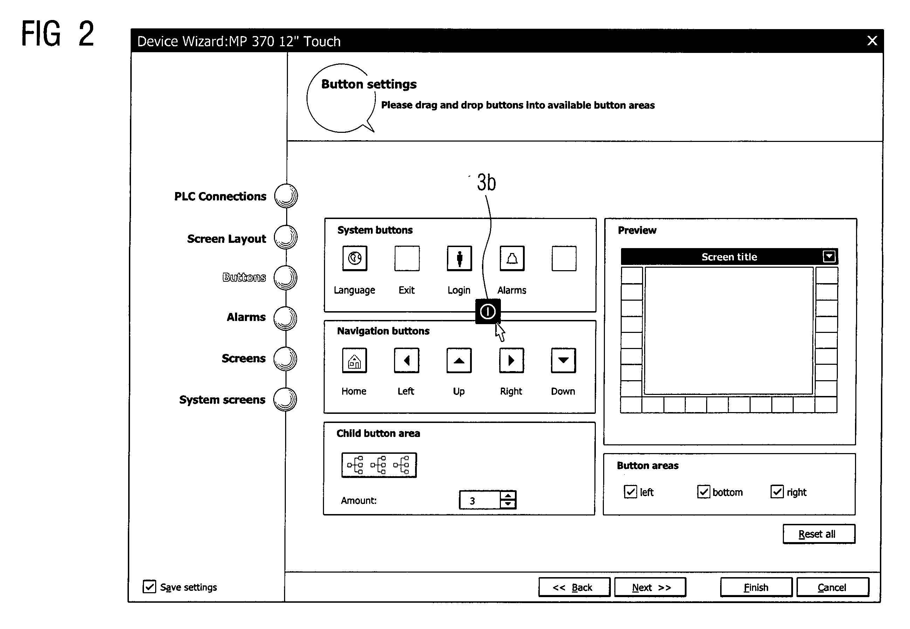

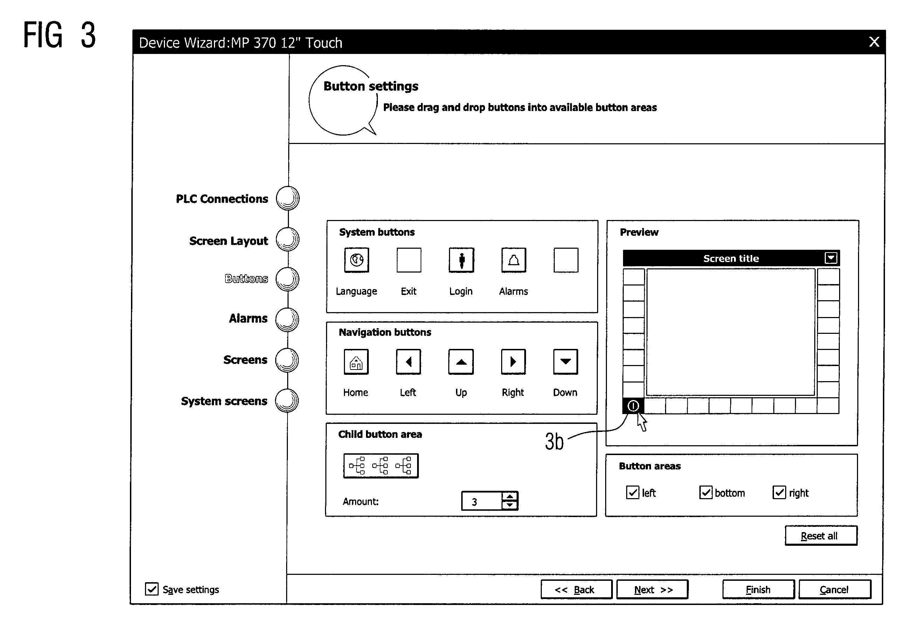

Wie insbesondere den Figuren 1 bis 3 entnommen werden kann, sind an dem Vorschaufenster 2 an beiden Seiten sowie unten Schaltflächen 3a bis 3d, 4a bis 4e und 5a anordenbar. Durch Anklicken beispielsweise der Schaltfläche 3b "Exit" (Figur 1) kann diese mittels Drag-and-Drop (Figur 2) beispielsweise in die linke untere Ecke des Vorschaufensters 2 gezogen werden (Figur 3). Soll die Schaltfläche 3b "Exit" an eine andere Position angeordnet werden bzw. aus dem Vorschaufenster entfernt werden, kann dies wiederum mittels Drag-and-Drop geschehen.

Typische Anwenderobjekte, wie beispielsweise ein Logo, ein Bereich für einen Titel oder Datum und Uhrzeit, können positioniert werden. Zusätzlich sind systemspezifische Objekte wie beispielsweise eine Temperaturanzeige oder ein Alarmfenster mögliche Optionen. Die Elemente können per Interaktion mit einer Maus oder einer Tastatur konfiguriert und positioniert werden.

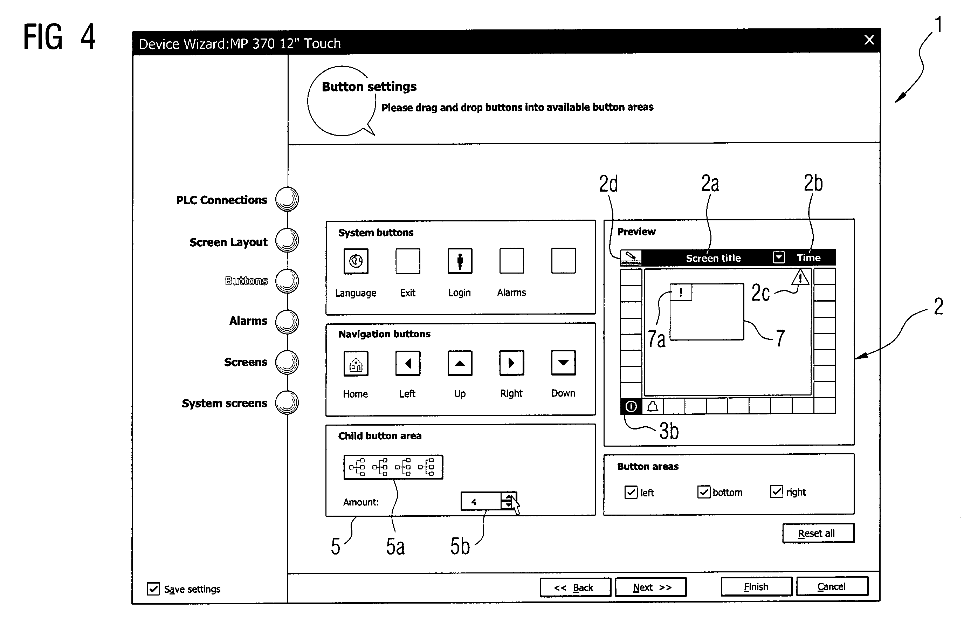

Wie Figur 4 entnommen werden kann, wurde am oberen Rand des Vorschaufensters 2, dem Headerbereich, ein Platzhalter 2a für einen Titel sowie ein Platzhalter 2b für die Uhrzeit angeordnet. Des Weiteren wurde in das Vorschaufenster 2 ein Alarmfenster 7 aufgenommen. In das Alarmfenster 7 wurde ein erster Alarmindikator 7a positioniert. In ähnlicher Weise wurde in das Vorschaufenster 2 ein zweiter Alarmindikator 2c positioniert. Die Elemente wurden mittels Drag-and-Drop in die entsprechenden Positionen gebracht.

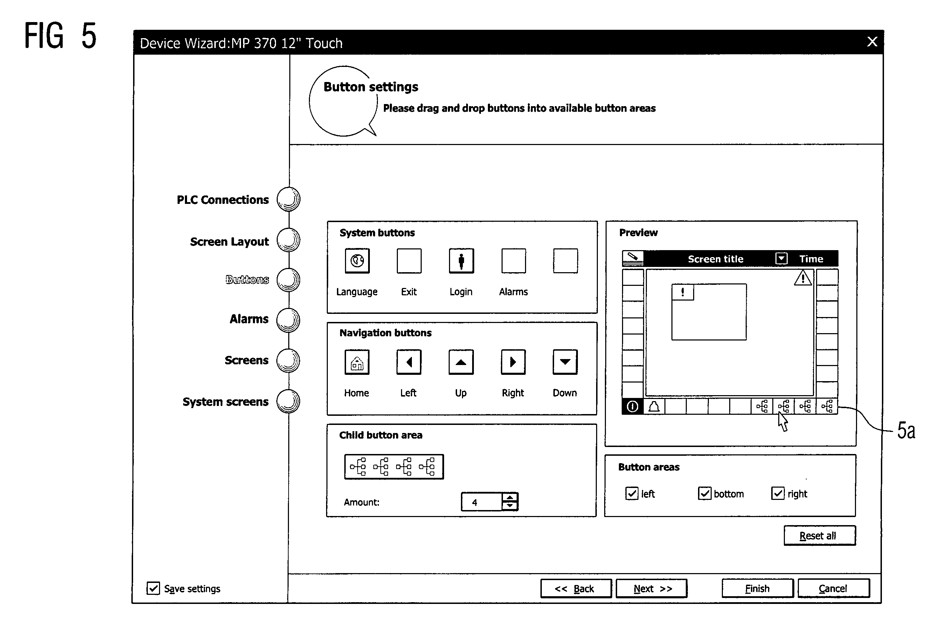

Wie Figur 4 ebenfalls entnommen werden kann, wurde in dem dritten Feld 5 die beliebig wählbare Anzahl 5b der Platzhalter 5a für Vater-Kind-Schaltflächen mit vier angegeben. Der aus vier Schaltflächen bestehende Bereich 5a ist dann mittels Drag-and-Drop an das untere Ende des Vorschaufensters 2 positioniert worden (Figur 5). Die Platzhalter 5a für Vater-Kind-Schaltflächen haben die Funktion, dass Schaltflächen eingefügt werden, wenn untergeordnete Anzeigen erstellt werden und in diesen angegeben wird, dass eine entsprechende Vater-Kind-Beziehung besteht. Durch Anwahl der betreffenden Schaltfläche kann dann die untergeordnete Anzeige direkt aufgerufen werden.

Neben vorgegebenen Elementen können auch selbst definierte Elemente wie beispielsweise Schaltflächen in das Vorschaufenster 2 eingefügt werden. Hierzu wird ein Platzhalter eingefügt und diesem dann eine Funktion aus einer Systemliste zugewiesen. Es kann auch eine Datenanbindung angeboten werden.

Es können auch externe Elemente geladen werden. So kann ein Anwender beispielsweise einen Platzhalter 2d für ein Logo links am oberen Rand des Vorschaufensters 2 anordnen, bei dem unmittelbar nach dem Einfügen oder später nach einem Klick auf den Platzhalter ein Datei-Browse-Dialog erscheint, aus dem ein Bild ausgewählt werden kann, welches dann im Vorschaufenster 2 angezeigt wird.

Objekte, die eine erweiterte Parametrierung zulassen, wie beispielsweise bei einer Vater-Kind-Beziehung, können durch ein übergeblendetes Icon wie beispielsweise ein kleines Dreieck in einer Ecke oder drei Punkte, welche das Öffnen eines Dialogs kennzeichnen, gekennzeichnet werden.

## Patentansprüche

1. Verfahren zum Bearbeiten einer Anzeige von Objekten durch Einfügen, Verändern oder Entfernen von Objekten oder Objektparametern, bei dem zu bearbeitende Objekte bzw. Objektparameter in einem separaten Vorschaufenster dargestellt werden, **dadurch gekennzeichnet, dass** die Bearbeitung der Objekte unmittelbar in dem Vorschaufenster erfolgt.

2. Verfahren nach Anspruch 1, **dadurch gekennzeichnet, dass** die Bearbeitung der Objekte bzw. Objektparameter durch Drag-and-Drop erfolgt.

3. Verfahren nach Anspruch 1 oder 2, **dadurch gekennzeichnet, dass** die Bearbeitung der Objekte bzw. Objektparameter durch Auswahl einer Vorgabe in einem Pop-Up-Menü erfolgt.

4. Verfahren nach einem der Ansprüche 1 bis 3, **dadurch gekennzeichnet, dass** Objekte bzw. Objektparameter mittels eines Datei-Browse-Dialogs aus externen Dateien in das Vorschaufenster geladen werden.

5. Verfahren nach einem der Ansprüche 1 bis 4, **dadurch gekennzeichnet, dass** die Objekte als Bereiche ausgebildet sind, welche als Platzhalter dienen.
